# EUROPÄISCHE PATENTSCHRIFT

(11) **EP 0 561 189 B1**
(45) Veröffentlichungstag und Bekanntmachung des Hinweises auf die Patenterteilung: **14.10.1998**
(21) Anmeldenummer: 93102988.8
(22) Anmeldetag: 25.02.1993
(51) Int. Cl.: H04N 5/445

(54) **Anordnung zum Empfang von Fernsehsignalen, deren Aufzeichnung und/oder Wiedergabe als Fernsehbilder**
Receiving device for television signals being recorded and/or played back as television pictures
Dispositif de réception de signaux de télévision enregistrés et/ou reproduits sous la forme d'images de télévision

(30) Priorität: 16.03.1992 DE 4208417
(43) Veröffentlichungstag der Anmeldung: 22.09.1993
(73) Patentinhaber: BSH Bosch und Siemens Hausgeräte GmbH, 81669 München (DE)
(72) Erfinder: Nickel, Rüdiger, W-8032 Gräfelfing (DE)

(56) Entgegenhaltungen:
- EP-A- 0 391 656
- EP-A- 0 408 892
- US-A- 4 314 375
- US-A- 4 405 946
- RADIO FERNSEHEN ELEKTRONIK Bd. 40, Nr. 11, 1991, BERLIN (DE) Seiten 677 - 679 DIETMAR LERCH 'Senderprogrammierung mit ATS-Plus'
- PATENT ABSTRACTS OF JAPAN vol. 12, no. 281 (E-641)2. August 1988 & JP-A-63 059 075
- PATENT ABSTRACTS OF JAPAN vol. 14, no. 36 (E-877)23. Januar 1990 & JP-A-12 68 368

## Beschreibung

Die Erfindung betrifft eine Anordnung zum Empfang von Fernsehsignalen, deren Aufzeichnung und/oder deren Wiedergabe als Fernsehbilder nach dem Oberbegriff des Patentanspruchs 1.

Aus der Zeitschrift "Funkschau" 19/1991, Seiten 58 - 60 ist bereits eine Anordnung bekannt, die dem Empfang von Fernsehsignalen, deren Aufzeichnung und/oder deren Wiedergabe als Fernsehbilder mit einer Anzeigeeinrichtung zur Wiedergabe der Fernsehbilder und/oder zur Anzeige alphanumerischer Zeichen dient. Diese Anordnung weist eine Steuerung auf, der ein Anzeigesteuerungsprogramm zugeordnet ist, das empfangene Senderkanaldaten (Kanalnummer, z.B. "CHO5", "CHO6", "CHO3") und Programmquellendaten (Sendername, z.B. "ARD", "ZDF", "BR-3") sowie deren Zuordnung zueinander visualisiert, und eine Tastatur, mit der Anzeigesteuerbefehle erzeugbar sind. Empfangenen Senderkanaldaten von Fernsehsendern, die keinen VPS-Code übertragen, wird bei der Belegung eines Speichers in einer VPI-Einheit (VPT-Videorecorder Programming by Teletext) eine gegenüber Senderkanaldaten von Fernsehsendern, die einen sie kennzeichnenden VPS-Code übertragen, geringere Priorität zugeordnet. Die Senderkanaldaten (z.B. Kanalnummer "CH12") der Sender ohne VPS-Code werden bei der bekannten Anordnung auf einer Anzeigeeinrichtung ohne den Sendernamen dargestellt. Die Anzeige dieses Sendernamens läßt sich bei der bekannten Anordnung mittels einer Tastatur (Taste "Text" in Verbindung mit zwei Tasten "Move") erzeugen, wobei einzelne alphanumerische Zeichen aus einer Tabelle alphanumerischer Zeichen auszuwählen sind. Dies geschieht mittels der "Move"-Tasten, die unterschiedlich gerichtete Suchbewegungen in der Tabelle auslösen. In der Regel sind für Sendernamen bzw. deren Abkürzungen drei oder vier alphanumerische Zeichen vorgesehen. Insgesamt erfordert die Anzeige dieser Sendernamen umfangreiche Tastenbetätigungen, deren Anzahl einerseits von der Länge des Sendernamens und damit von der Anzahl der auszuwählenden alphanumerischen Zeichen und andererseits von dem Abstand abhängig ist, in dem die auszuwählenden alphanumerischen Zeichen in der Tabelle angeordnet sind. Außerdem sind im Anzeigesteuerprogramm Prozeduren vorzusehen, mit denen sich durch fehlerhafte Tastenbetätigungen bewirkte Anzeigefehler löschen lassen.

Aus Radio Fernsehen Elektronik, Band 40, Nr. l1, 1991, Berlin (DE), Seiten 677 - 679; D. Lerch: "Senderprogrammierung mit ATS-plus" ist eine Anordnung zum Empfang von Fernsehsignalen, deren Aufzeichnung und/oder deren Wiedergabe als Fernsehbilder bekannt. Die bekannte Anordnung ist in der Weise ausgestaltet, daß, sofern ein gefundener Sender kein VPS-Signal überträgt, die Speicherung des Sendernamens, des Videotext-Standards und der Seitenzahl der Programmübersicht entfallen. Für Sender ohne VPS wird die Programmspeicherplatz-Nummer als Programmcode eingetragen.

Ausgehend von diesem Stand der Technik liegt der Erfindung die Aufgabe zugrunde, eine Anordnung der eingangs genannten Art anzugeben, die eine für die Bedienperson einfache Anzeige von Programmquellendaten (Sendernamen) ermöglicht.

Diese Aufgabe wird erfindungsgemäß mit den Merkmalen des Patentanspruchs 1 gelöst.

Als erfindungswesentlich ist anzusehen, daß die Anordnung einen Speicher mit Programmquellendaten aufweist. Die Auswahl einzelner alphanumerischer Zeichendaten und deren Aneinanderreihung zur Bildung der Programmquellendaten erübrigt sich. Die Zahl der Tastenbetätigungen reduziert sich gegenüber der bekannten Anordnung erheblich, da nur noch die Programmquellendaten, die jeweils eine den Fernsehsendernamen bezeichnende Kombination darstellen, aus dem Speicher abzurufen und einem Senderkanaldatum zuzuordnen ist.

Eine weitere vorteilhafte Ausführungsform ist dadurch gekennzeichnet, daß der Speicher lösbar mit der Anordnung verbunden ist. Dies ermöglicht es, die Anordnung in einer Grundausstattung ohne den Speicher herzustellen und später jeweils einen Speicher mit empfangsgebietindividuellen Programmquellendaten in die Anordnung einzusetzen. Damit läßt sich die Anordnung etwa bei einem Betrieb in unterschiedlichen Empfangsgebieten oder, wenn weitere Fernsehsender im jeweiligen Empfangsgebiet ihren Senderbetrieb ohne VPS-Code aufnehmen, in einfacher Weise an die geänderten Empfangsverhältnisse anpassen.

Weitere vorteilhafte Ausführungsformen der Erfindung sind in den Unteransprüchen gekennzeichnet.

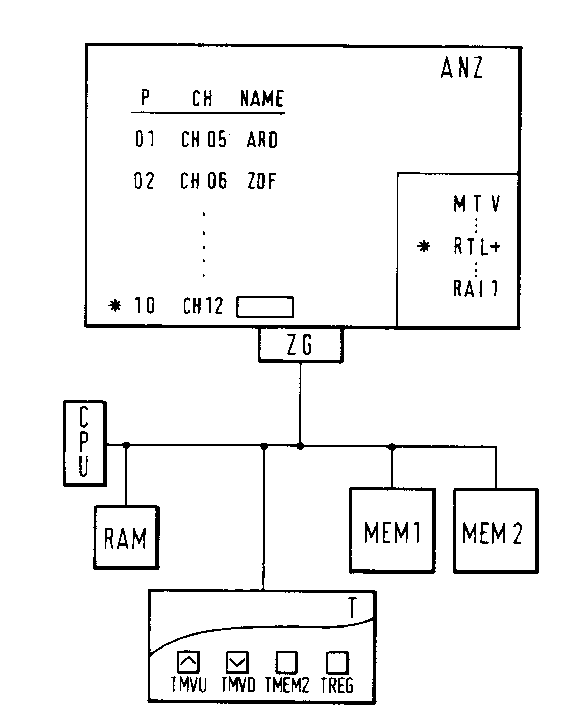

Eine Ausführungsform der Erfindung wird nun anhand der Figur beschrieben. Diese zeigt die erfindungsgemäße Anordnung zum Empfang von Fernsehsignalen, deren Aufzeichnung und/oder deren Wiedergabe als Fernsehbilder mit einer Anzeigeeinrichtung zur Wiedergabe der Fernsehbilder und/oder zur Anzeige alphanumrischer Zeichen. Dabei kann es sich um ein Fernsehempfangsgerät bzw. auch in Verbindung damit um einen Videorecorder handeln, der - mit Ausnahme des Speichers MEM 2 und des der Anzeigesteuerung zugeordneten Programms - wie der Videorecorder strukturiert sein kann, der in der in der Beschreibungseinleitung genannten Literaturstelle "Funkschau" 19/1991, Seiten 58 - 60 offenbart ist.

Die Anordnung weist eine Anzeigeeinrichtung ANZ mit einem vorgeschalteten Zeichengenerator ZG auf. Die Anzeigeeinrichtung wird beispielsweise durch den Monitor eines Fernsehempfangsgerätes oder durch einen separaten Monitor eines Videorecorders bzw. durch ein (Flüssigkristall-)Display gebildet.

Die Anordnung weist ferner eine Steuerung CPU auf, die über einen Datenbus mit dem Zeichengenerator ZG bzw. der Anzeigeeinrichtung ANZ, mit Speichern RAM, MEM1 und MEM2 sowie mit einer Tastatur T verbunden. Der Steuerung CPU ist ein Betriebsprogramm zugeordnet, das im Speicher RAM abgelegt ist. Es kann in an sich bekannter Weise ("Funkschau" 19/90, Seiten 58 - 60) in der Weise ausgestaltet sein, daß ein Sendersuchlauf über den Empfangsfrequenzbereich realisiert wird. Wird dabei ein Sender gefunden, so stoppt der Suchlauf und es werden die Daten des VPS-Decoders in den Speicher MEM1 eingelesen, wo der Name der Programmquelle bzw. des Senders (z.B. "ARD", "ZDF", "BR-3") mit der zugeordneten Kanalnummer (z.B. channel number 06, 03, 17) abgelegt wird. Neben den Sender-Erkennungsdaten wird auch die Stärke des ankommenden Signals ausgewertet. Die sogenannte Automatic Gain Control-Spannung, die direkt von der Feldstärke des empfangenen Senders abhängig ist, liefert hierzu notwendige Information. Der Vergleich dieser Spannungen mit einem werkseitig voreingestellten Referenzwert führt zur Beurteilung der Signalqualität. Ein Komparator liefert ein Ausgangssignal "U" für einen empfangenen Sender mit geringer Feldstärke und das Ausgangssignal "I" für einen empfangenen Sender mit ausreichender Feldstärke.

Die Senderdaten werden in den Senderspeicher eingetragen und in einer Menüleiste des Monitors angezeigt. Dieser Vorgang wiederholt sich so lange, bis das obere Ende des UHF-Bandes erreicht ist, und damit alle Frequenzbereiche durchsucht worden sind. Im Anschluß daran werden die Senderdaten beispielsweise in der Weise sortiert, daß der Sender bzw. Programmquelle "ARD" (1. Deutsches Fernsehen") einen ersten Senderspeicherplatz belegt und die Sender bzw. Programmquellen "ZDF" (Zweites Deutsches Fernsehen) und "BR-3" (Bayerischer Rundfunk, 3. Programm) den zweiten bzw. dritten Senderspeicherplatz belegt. Sender, die keinen VPS-Code übertragen, erhalten - zumindest vorerst - "hintere" Senderspeicherplätze.

Bei der erfindungsgemäßen Anordnung werden die empfangenen Senderkanaldaten, die empfangenen Programmquellendaten (bzw. die im Speicher MEM2 abgespeicherten Zeichendaten, die Programmquellennamen (Namen von Fernsehsendern, die keinen VPS-Code übertragen) und ihre Zuordnung bezeichnende Daten in den Speicher MEM1 abgelegt.

Das der Steuerung CPU zugeordnete Programm umfaßt auch einen der Anzeigesteuerung dienenden Teil, der empfangene Senderkanaldaten (z.B. CHO5, CHO6, ... CH12) und Programmquellendaten (z.B. "ARD", "ZDF", ...) sowie deren Zuordnung zueinander visualisiert. Ein Beispiel für eine derartige Anzeige ist in der Figur dargestellt, wobei "P" die Nummern der Senderspeicherplätze im Speicher MEM1 und gegebenenfalls die Nummern von in der Figur nicht dargestellten Programmtasten bezeichnet.

Die Anzeigefläche ist in einen ersten größeren Bereich unterteilt, in dem die Nummern "P" der Senderspeicherplätze im Speicher MEM1, die Senderkanaldaten und gegebenenfalls die Programmquellendaten der Fernsehsender angezeigt werden, die den VPS-Code übertragen. In einem zweiten, kleineren Bereich der Anzeigefläche lassen sich die im Speicher MEM2 abgespeicherten Programmquellendaten der Fernsehsender anzeigen, die keinen VPS-Code übertragen.

Bei der ind er Figur dargestellten Anzeige ist im Senderspeicherplatz "10" das Senderkanaldatum (Senderkanalnummer) "CH12" eingetragen. Diesem Senderkanaldatum ist kein empfangenes Programmquellendatum zugeordnet, da der betreffende Fernsehsender, keinen VPS-Code überträgt. Erfindungsgemäß läßt sich diesem Senderkanaldatum "CH12" das im Speicher MEM2 abgespeicherte Zeichendatum "XYZ" zuordnen.

Die Anordnung weist ferner eine Tastatur T auf, die beispielsweise die Tasten "TMVU" (Taste Move UP") und die Tasten "TMVD" (Taste Move Down) umfaßt. Diese Tasten dienen der Steuerung von Suchbewegungen auf der Anzeigeeinrichtung. Ferner umfaßt die Tastatur eine Taste TMEM2. Mit dieser Taste wird der Abruf der in einem zweiten Speicher MEM2 abgelegten Daten und deren Anzeige auf der Anzeigeeinrichtung ANZ ausgelöst. Mit einer weiteren Taste TREG läßt sich die Zuordnung zwischen einem Sendekanaldatum, das im Speicher MEM1 abgespeichert und im größeren Bereich der Anzeigefläche dargestellt ist, und einem Programmquellendatum herstellen, das im Speicher MEM2 abgespeichert und im kleineren Bereich der Anzeigefläche dargestellt ist.

Bei den im Speicher MEM2 abgelegten Programmquellendaten handelt es sich um Namen von Fernsehsendern, die keinen VPS-Code übertragen. Bei dem in der Figur dargestellten Beispiel lauten die Programmquellendaten "MTV", ..., "RTL plus", ... "RAI1".

Die im größeren Bereich der Anzeigefläche der Anzeigeeinrichtung ANZ dargestellte Tabelle läßt sich wie bei der bekannten Anordnung visualisieren. Durch Betätigung der Taste TMEM2 wird der Abruf der im Speicher MEM2 abgelegten Daten, d.h. der werkseitig eingegebenen Programmquellennamen ausgelöst. Diese Daten werden dem Zeichengenerator ZG zugeführt und im kleineren Bereich der Anzeigefläche visualisiert. Dabei kann vorgesehen sein, daß jeweils nur ein Programmquellenname visualisiert wird. Vorzugsweise werden jedoch - wie in der Figur dargestellt - gleichzeitig eine Mehrzahl bzw. alle im Speicher MEM2 abgespeicherten Programmquellennamen im kleineren Bereich der Anzeigefläche visualisiert.

Mit den Tasten "TMVU" (Move UP) und "TMVD" (Move Down) lassen sich Markierungssymbole in beiden Anzeigebereichflächen örtlich verändern. In der Figur sind die Markierungssymbole mit "*" bezeichnet. Diese sind zeilenweise verschiebbar. Insbesondere sind jedoch verschiebbare Menüleisten vorgesehen. Das der Steuerung CPU zugeordnete Programm ist nun inder Weise ausgestaltet, daß sich im größeren Bereich der Anzeigefläche dargestellte Senderkanaldaten eines Senders, der keinen VPS-Code überträgt (diese Senderkanaldaten sind nicht durch ein Programmquellendatum ergänzt), zu Programmquellendaten zuordnen lassen, die im Speicher MEM2 abgespeichert und im kleineren Bereich der Anzeigefläche dargestellt sind. Diese Zuordnung wird durch Betätigung der Taste TREG ausgelöst. Dabei wird eine die Zuordnung bezeichnende Information erzeugt und im Speicher MEM1 abgespeichert. Das ausgewählte Programmquellendatum wird im größeren Bereich der Anzeigefläche zugeordnet zu dem Sendekanaldatum an der Stelle visualisiert, die in der Figur durch ein Rechteck in der Spalte der Programmquellendaten ("NAME") angegeben ist.

Alternativ hierzu ist vorgesehen, daß sich mit den Tasten "TMVU" (Move UP) und "TMVD" (Move Down) ein Markierungssymbol "*" in der gesamten Anzeigefläche zeilenweise verändern läßt. Insbesondere ist dann eine verschiebbare Menüleiste vorgesehen. Das der Steuerung CPU zugeordnete Programm ist in diesem Fall in der Weise ausgestaltet, daß die Senderkanaldaten (CHO5, CHO6, CH12) in Form einer Liste untereinander auf der Anzeigeeinrichtung ANZ dargestellt werden, und daß das ausgewählte, einen Programmquellennamen ("XYZ") bezeichnende Zeichendatum demjenigen Senderkanaldatum (z.B. CH12) ohne zugehöriges empfangenes Programmquellendatum zugeordnet wird, welches in der Liste die relativ höchste Position einnimmt. Diese Liste würde dann in der Spalte "NAME" mehrere (zunächst freie) Stellen aufweisen, von denen in der Figur nur eine mit dem Rechteck gekennzeichnet ist. Das ausgewälte Sendedatum sei wiederum "CH12". Die Auswahl dieses Senderkanaldatums CH12 erfolgt mit Hilfe des Markierungssymbols bzw. mit Hilfe der Menüleiste. Bei dieser Ausführungsform der Erfindung kann die Taste TREG entfallen, da die Zuordnung von Senderkanaldatum (CH12) in der ersten Anzeigebereichsfläche zu dem in der zweiten Anzeigebereichsfläche angezeigten Programmquellennamen durch das Markierungssymbol "*" und die höchste Tabellenposition (bezogen auf Senderkanaldaten ohne zugehörige, empfangene Programmquellendaten) erfolgt.

Der ausgewählte Programmquellenname wird in der Spalte "NAME" in der Zeile des zugeordneten Sendekanaldatums angezeigt.

Unabhängig davon, ob ein oder zwei Markierungssymbole "*" bzw. eine oder zwei verschiebbare Menüleisten für die Auswahl eines Programmquellennamens und der Zuordnung zu einem Sendekanaldatum vorgesehen werden, kann das der Steuerung CPU zugeordnete Anzeigesteuerungsprogramm in der Weise ausgestaltet sein, daß die Senderkanaldaten (z.B. CHO5, CHO6, CH12) und mindestens ein auswählbares, einen Programmquellennamen bezeichnendes Zeichendatum gleichzeiti mit den Fernsehbildern des laufenden Programms auf der Anzeigeeinrichtung ANZ dargestellt werden.

Die von der Anzeigeeinrichtung gebildete Anzeigefläche wird bei dieser Ausführung also sowohl für die Wiedergabe der Fernsehbilder als auch für die Senderkanaldaten (z.B. CHO5, CHO6, CH12), gegebenenfalls für die Programmquellendaten (z.B. ARD, ZDF) und für die aus dem Speicher MEM2 abgerufenen Programmquellennamen (z.B. MTV, ..., RTL plus, ... RAI1) verwendet. Die Senderkanaldaten, Programmquellendaten und Programmquellennamen werden entweder in einem separaten Bereich der Anzeigefläche dargestellt (diese Aufteilung der Anzeigefläche ist in der Figur nicht gezeigt) oder in überblendeter Form.

Der Speicher MEM2 mit den werkseitig eingegebenen Programmquellennamen ist vorzugsweise lösbar und manuell auswechselbar mit der Anordnung verbunden. Er ist insbesondere von außen zugänglich, so daß auch Endbenutzer ohne besondere Kenntnisse und ohne Werkzeug einen Speicher MEM2 einsetzen bzw. austauschen können.

Die Speicher MEM1 und MEM2 sind als nichtflüchtige Speicher ausgebildet.

## Patentansprüche

1. Anordnung zum Empfang von Fernsehsignalen, deren Aufzeichnung und/oder deren Wiedergabe als Fernsehbilder, mit einer Anzeigeeinrichtung (ANZ) zur Wiedergabe der Fernsehbilder und/oder zur Anzeige alphanumerischer Zeichen, mit einer Steuerung (CPU), der ein Anzeigesteuerungsprogramm zugeordnet ist, das erste von ersten Programmquellen (ARD, ZDF) übertragene, und von der Anordnung empfangene Senderkanaldaten (CH05, CH06) und erste Programmquellendaten, die die ersten Programmquellen bezeichnen, und deren Zuordnung zueinander visualisiert und das weiterhin zweite von der Anordnung empfangene Senderkanaldaten (CH12) zweiter Programmquellen (MTV, RTL plus, RAI1) visualisiert, die keine Programmquellendaten übertragen, und mit einer Tastatur (T), mit der Anzeigesteuerbefehle erzeugbar sind,
**dadurch gekennzeichnet,**
daß die Anordnung einen Speicher (MEM2) mit zweiten Programmquellendaten, die die zweiten Programmquellen bezeichnen, aufweist, und daß das der Steuerung (CPU) zugeordnete Anzeigesteuerungsprogramm in der Weise ausgestaltet ist, daß die zweiten Programmquellendaten, ausgelöst durch Betätigung der Tastatur (T), aus dem Speicher (MEM2) abgerufen und auf der Anzeigeeinrichtung (ANZ) gemeinsam mit den zweiten Senderkanaldaten (CH12) darstellbar sind, und daß ein aus dem Speicher (MEM2) abgerufenes zweites Programmquellendatum auswählbar ist und einem zweiten Senderkanaldatum (CH12) zugeordnet wird.

2. Anordnung nach Anspruch 1, **dadurch gekennzeichnet**, daß das der Steuerung (CPU) zugeordnete Anzeigesteuerungsprogramm in der Weise ausgestaltet ist, daß die Senderkanaldaten (CHO5, CHO6, CH12) in Form einer Liste untereinander auf der Anzeigeeinrichtung (ANZ) dargestellt werden, und daß das ausgewählte, einen Programmquellennamen bezeichnende Programmquellendatum demjenigen Senderkanaldatum (CH12) ohne zugehöriges empfangenes Programmquellendatum zugeordnet wird, welches in der Liste die relativ höchste Position einnimmt.

3. Anordnung nach einem der vorstehenden Ansprüche, **dadurch gekennzeichnet,** daß das der Steuerung (CPU) zugeordnete Anzeigesteuerungsprogramm in der Weise ausgestaltet ist, daß die Senderkanaldaten (CHO5, CHO6, CH12) und mindestens ein auswählbares, einen Programmquellennamen bezeichnendes Programmquellendatum gleichzeitig mit den Fernsehbildern auf der Anzeigeeinrichtung (ANZ) entweder in einem separaten Bereich der Anzeigefläche oder in überblendeter Form dargestellt wird.

4. Anordnung nach einem der vorstehenden Ansprüche, **dadurch gekennzeichnet,** daß der Speicher (MEM2) lösbar mit der Anordnung verbunden ist.

## Claims

1. Arrangement for the reception of television signals, the recording thereof and/or the reproduction thereof as television images with a display device (ANZ) for reproducing the television images and/or for displaying alpha-numeric symbols, with a control (CPU) associated with a display control program, which visualises first transmitter channel data (CH05, CH06), which are transmitted by first program sources (ARD, ZDF) and received by the arrangement, and first program source data, which denote the first program sources, and the mutual association thereof and which further visualises second transmitter channel data (CH12), which are received by the arrangement, of second program sources (MTV, RTL plus, RAI1) not transmitting any program source data, and with a keyboard (T) by which display control commands are producible, characterised thereby that the arrangement comprises a store (MEM2) with second program source data denoting the second program sources, and that the display control program associated with the control (CPU) is designed in such a way that the second program source data, which are triggered by actuation of the keyboard (T), are called up from the store (MEM2) and can be represented on the display device (ANZ) together with the second transmitter channel data (CH12), and that a second program source datum called up from the store (MEM2) is selectable and is associated with a second transmitter channel datum (CH12).

2. Arrangement according to claim 1, characterised thereby that the display control program associated with the control (CPU) is designed in such a way that the transmitter channel data (CH05, CH06, CH12) are represented in the form of a list one under the other on the display device (ANZ) and that the selected program source datum denoting a program source name is associated with that transmitter channel datum (CH12), without accompanying received program source datum, which occupies the relatively highest position in the list.

3. Arrangement according to one of the preceding claims, characterised thereby that the display control program associated with the control (CPU) is designed in such a way that the transmitter channel data (CH05, CH06, CH12) and at least one selectable program source datum denoting a program source name are represented on the display device (ANZ) simultaneously with the television images either in a separate region of the display area or in faded form.

4. Arrangement according to one of the preceding claims, characterised thereby that the store (MEM2) is detachably connected with the arrangement.

## Revendications

1. Dispositif de réception de signaux de télévision enregistrés et/ou reproduits sous forme d'images de télévision, comportant un dispositif d'affichage (ANZ) destiné à reproduire des images de télévision et/ou à afficher des caractères alphanumériques, une commande (CPU) à laquelle est affecté un programme de commande d'affichage, qui désigne les premières données du canal émetteur (CH05, CH06) transmises par les premières sources de programme (ARD, ZDF) et reçues par le dispositif et les premières données source de programme qui désignent les premières sources de programme et dont leur affectation est visualisée les unes par rapport aux autres et qui visualisent par ailleurs les secondes données du canal émetteur reçues par le dispositif (CH12) de seconde source de programme (MTV, RTL plus, RAI1), qui ne transmettent pas de données source de programme, et comportant un clavier (T) permettant de générer des instructions de commande d'affichage,
**caractérisé en ce que**
le dispositif comprend une mémoire (MEM2) présentant les secondes données source de programme, qui désignent les secondes sources de programme et en ce que le programme de commande de l'affichage affecté à la commande (CPU) est conçu de telle façon que les secondes données source de programme, déclenchées par l'actionnement du clavier (T), peuvent être appelées de la mémoire (MEM2) et représentées sur le dispositif d'affichage (ANZ) avec les secondes données du canal émetteur (CH12), et en ce que une seconde date source de programme appelée de la mémoire (MEM2) peut être sélectionnée et affectée à une seconde date du canal émetteur (CH12).

2. Dispositif selon la revendication 1,
**caractérisé en ce que**
le programme de commande de l'affichage affecté à la commande (CPU) est conçu de telle sorte que les données du canal émetteur (CH05, CH06, CH12) sont représentées les unes en dessous des autres sous la forme d'une liste sur le dispositif d'affichage (ANZ) et en ce que la date source du programme sélectionnée désignant un nom source du programme est affectée à la date du canal émetteur (CH12) sans date source de programme reçue afférente, qui occupe la position la plus haute relativement dans la liste.

3. Dispositif selon l'une des revendications précédentes,
**caractérisé en ce que**
le programme de commande de l'affichage affecté à la commande (CPU) est conçu de telle sorte que les données du canal émetteur (CH05, CH06, CH12) et au moins une date source de programme sélectionnable désignant un nom source de programme sont représentées simultanément avec les images de télévision sur le dispositif d'affichage (ANZ) soit dans une zone séparée de la surface d'affichage soit sous forme de fondu enchaîné.

4. Dispositif selon l'une des revendications précédentes,
**caractérisé en ce que**
la mémoire (MEM2) est raccordée au dispositif de manière détachable.
